(19) Europäisches Patentamt
European Patent Office
Office européen des brevets

(11) **EP 3 772 979 B1**

(12) **EUROPEAN PATENT SPECIFICATION**

(45) Date of publication and mention
of the grant of the patent:
**19.01.2022 Bulletin 2022/03**

(21) Application number: **19707804.1**

(22) Date of filing: **28.02.2019**

(51) International Patent Classification (IPC):
**A23G 9/28** *(2006.01)*

(52) Cooperative Patent Classification (CPC):
**A23G 9/28; A23G 9/283**

(86) International application number:
**PCT/EP2019/055065**

(87) International publication number:
**WO 2019/185294 (03.10.2019 Gazette 2019/40)**

(54) **PORTABLE DISPENSER FOR FROZEN CONFECTION**

TRAGBARER SPENDER FÜR GEFRORENES KONFEKT

DISTRIBUTEUR PORTABLE POUR CONFISERIES SURGELÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.03.2018 EP 18165173**

(43) Date of publication of application:
**17.02.2021 Bulletin 2021/07**

(73) Proprietor: **Unilever IP Holdings B.V.**
**3013 AL Rotterdam (NL)**

(72) Inventors:
• **BUTER, René, Joachim**
**3133 AT Vlaardingen (NL)**
• **DIKS-WARMERDAM, Leonie, Martine**
**3133 AT Vlaardingen (NL)**
• **KRIEG, Johannes**
**3133 AT Vlaardingen (NL)**

(74) Representative: **Askew, Sarah Elizabeth**
**Unilever PLC**
**Unilever Patent Group**
**Bronland 14**
**6708 WH Wageningen (NL)**

(56) References cited:
**EP-A1- 1 386 542     IT-A1- PD 940 219**
**US-A- 3 286 884     US-A- 5 826 746**
**US-A- 5 921 435**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field of the invention**

The present invention relates to portable dispenser for dispensing frozen confections. The invention more particularly relates to such dispensers which can be mounted on a person.

**Background of the invention**

Portable dispensers for ice cream have been proposed for some time. In particular portable dispensers have been proposed for dispensing ice cream from single dose cartridges.

EP 1 386 542 A discloses dispensing frozen aerated edible product from single dose cartridges containing said frozen aerated edible product, using a portable dispenser comprising thermally insulated storing means for storing single dose cartridges containing said frozen aerated edible product, said thermally insulated storing means being adapted to be mounted on the back of a person, and dispensing means capable of holding a single dose cartridge containing said frozen aerated edible product outside the storing means, said dispensing means comprising discharge means capable of discharging frozen aerated edible product out of said single dose cartridge.

In one embodiment of the dispenser disclosed in EP 1 386 542 A the dispensing means are adapted to be mounted on the front of the person. No particular situation of the dispensing means on the front of the person are disclosed and the dispensing means are said to be single handed actuated such that the operator can use his other hand, for example to hold a cup or wafer cone.

The present inventors have now recognized that there is a need for improvements in portable dispensers for dispensing frozen confections from single dose cartridges. In particular, the present inventors have found that there is a need for a dispenser that allows the person carrying the device to have use of both hands whilst dispensing ice cream. Use of both hands not only allows for holding of a container such as a cup or wafer cone into which the frozen confection is being dispensed, but also to use the other hand, for example, for applying toppings or the like to the dispensing ice cream and/or handling money or a payment-card reading device. Moreover, the inventors have recognized that there is a need for a dispenser which allows for increased consumer interaction with the dispensing process.

The present inventors have found that by situating the device that discharges the ice cream from a cartridge in a specific location on the front of the person, one or more of the foregoing needs can be met.

**Summary of the invention**

In a first aspect, the present invention is directed to a portable dispenser for dispensing frozen confections from single-dose cartridges, the dispenser comprising:

- a thermally insulated container for storing the single-dose cartridges and being adapted to be mounted on the back of a person; and
- a discharge device capable of holding a single dose cartridge and discharging frozen confection from the cartridge, the discharge device comprising an actuator for activating the discharge device;

wherein the device is adapted to be mounted on the front of the torso of the person and the actuator is disposed on a surface of the device facing away from the person on which the device is mounted; and wherein the actuator is a button and the device is activated by a single press of the button.

Mounting the device on the torso of the person removes the need to hold the device during actuation and so leaves both hands of the person free for other activities. Furthermore, such mounting provides the opportunity for the actuator for the dispensing process to be accessible to a customer who can themselves start the dispensing process and thus become more engaged in the process.

Thus the device comprises an actuator for activating the discharge device, the actuator being disposed on a surface of the device facing away from the person on which the device is mounted, preferably the actuator is disposed on a front surface of the device. The actuator is a button and the device is activated by a single press of the button. By "single press" is meant that by simply depressing and then immediately releasing the button the whole dispensing process is effected without having to hold the button during the dispensing process.

Preferably the dispenser is self-contained so that the container and device do not need to be separately mounted on the person. For example, the dispenser preferably comprises a device support extending from the thermally insulated container to the device. More preferably the support is adapted to pass over one or both shoulders of the person on who's back the container is mounted.

If the device becomes too bulky, the freedom of the person to move their hands in front of them becomes limited. To limit the size of the device it is preferred that any power source (such as a battery pack if the device is electrically powered) is located on, in or at least adjacent to the container. Thus it is preferred that the device is powered by a power source located in the container and a conduit for conveying power (e.g. a power cable for electrical power) extends from the source to the device. To protect the conduit, it is especially preferred to mount the conduit on or in the device support.

The single dose cartridges preferably comprise:

- a product compartment containing the frozen confection and having a product outlet, and
- a moveable wall through which a dispensing force can be transmitted to the frozen confection to urge it through the outlet.

More preferably the cartridges comprise a cylindrical outer wall and a piston slideable within the outer wall and forming the moveable wall.

The device preferably comprises a plunger for applying the dispensing force to the moveable wall.

Each cartridge holds a single dose of frozen confection. Preferably the amount of frozen confection in each cartridge is from 50 to 200 g, more preferably from 60 to 175 g and most preferably from 70 to 150 g.

The dispenser may comprise other elements in addition to the container and device. For example, the dispenser may additionally comprise a tray adapted to be mounted on the front of the person and below the discharge device, thus further freeing the hands of the person. Additionally or alternatively the device may comprise a waste holder for holding spent cartridges and the like. Preferably the waste holder is mounted on, in or at least adjacent to the container.

The dispenser of the present invention may be used for dispensing of a range of frozen confections. To aid discharging the confection from a cartridge, however, it is preferred that the frozen confection within the cartridge is formulated to be soft and yet stable at a range of temperatures encountered in storage freezers. In particular, it is preferred that the frozen confection comprises freezing point depressants in an amount of from 25 to 35% by weight of the frozen confection, wherein the number average molecular weight $<M>_n$ of the freezing point depressants is less than 250 g mol$^{-1}$. More preferably the number average molecular weight $<M>_n$ of the freezing point depressants is no less than 205 g mol$^{-1}$.

For the purposes of the present invention, the average molecular weight for a mixture of freezing point depressants is defined by the number average molecular weight $<M>_n$ (Equation 1). Where $w_i$ is the mass of species i, $M_i$ is the molar mass of species i and $N_i$ is the number of moles of species i of molar mass $M_i$.

$$<M>_n = \frac{\sum w_i}{\sum (w_i/M_i)} = \frac{\sum N_i M_i}{\sum N_i}$$

(Equation 1)

Freezing point depressants as defined in this invention consist in:

- monosaccharides and disaccharides
- oligosaccharides containing from three to ten monosaccharide units joined in glycosidic linkage.
- corn syrups with a dextrose equivalent (DE) of greater than 20, preferably greater than 40 and more preferably greater than 60. Corn syrups are complex multicomponent sugar mixtures and the dextrose equivalent is a common industrial means of classification. Since they are complex mixtures their number average molecular weight $<M>_n$ can be calculated from Equation 2 below. (Journal of Food Engineering (1997) 33: 221-226)

$$DE = \frac{18016}{<M>_n}$$

(Equation 2)

- erythritol, arabitol, glycerol, xylitol, sorbitol, mannitol, lactitol and malitol.
- ethanol.

Especially preferred frozen confections are disclosed in WO 2017/133863 A1.

The frozen confection is typically made by freezing a mix (more preferably a pasteurized mix) of ingredients such as water, fat, freezing point depressants, protein (normally milk proteins), and optionally other ingredients such as emulsifiers, stabilisers, colours and flavours. Frozen confections include ice cream, gelato, frozen yoghurt, sorbets, granitas, shaved ices and the like. Preferably the frozen confection is ice cream.

The frozen confection is preferably aerated. By "aerated" is meant that the confection has an overrun of at least 30%. More preferably the frozen aerated confection has an overrun of from 70 to 135%, most preferably from 80 to 110%.

Overrun (OR) is defined by the following Equation 3

$$OR = \frac{volume..of..frozen..confection - volume..of..premix..at..ambient..temp}{volume..of..premix..at..ambient..temp} \times 100$$

(Equation 3)

It is measured at atmospheric pressure. Ambient temperature is 20°C.

Except in the Examples, all numbers in this description indicating amounts of material, time periods, length scales, conditions of reaction, physical properties of materials and/or use may optionally be understood as modified by the word "about".

It should be noted that in specifying any range of values, any particular upper value can be associated with any particular lower value.

For the avoidance of doubt, the word "comprising" is intended to mean "including" but not necessarily "consisting of" or "composed of". In other words, the listed steps or options need not be exhaustive.

The disclosure of the invention as found herein is to be considered to cover all embodiments as found in the claims as being multiply dependent upon each other irrespective of the fact that claims may be found without multiple dependency or redundancy.

Where a feature is disclosed with respect to a particular aspect of the invention such disclosure is also to be considered to apply to any other aspect of the invention *mutatis mutandis.*

**Brief description of the drawings**

The present invention will now be described with reference to the figures, wherein:

Figure 1 shows a schematic side view of an embodiment of the dispenser of the invention mounted on a person.
Figure 2 shows a side view of the dispenser of Figure 1 before being mounted on the person.
Figure 3 shows a sectional view of the thermally-insulated container of the dispenser shown in Figures 1 and 2.
Figure 4a shows a front view of the discharge device of the dispenser of Figures 1 and 2 holding a cartridge ready for discharge of the contents.
Figure 4b shows a back view of the dispenser and cartridge of Figure 4a.
Figure 4c shows a side view of the dispenser and cartridge of Figure 4a.
Figure 4d shows a sectional view of the dispenser of Figure 4c, taken through a plane containing line A-A.

**Detailed description**

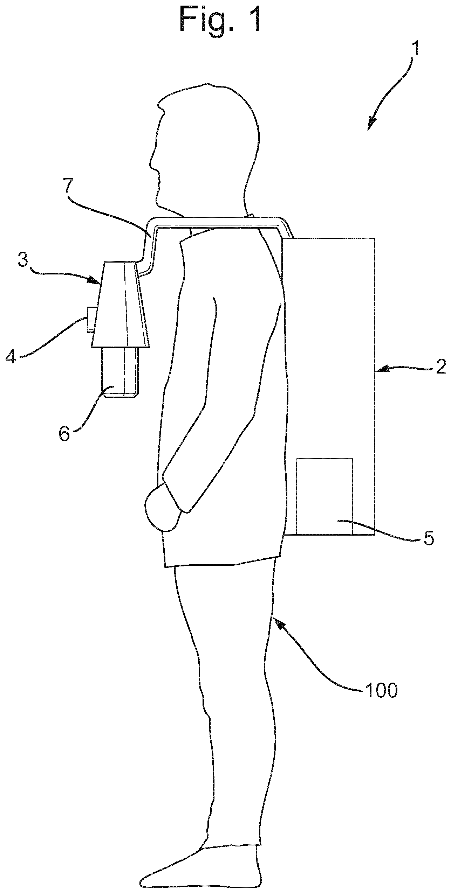

Figures 1 to 3 show a portable dispenser (1) according to an embodiment of the invention and mountable on a person (100). The dispenser comprises a backpack (2) which in this embodiment forms the container of the invention and a discharge device (3).

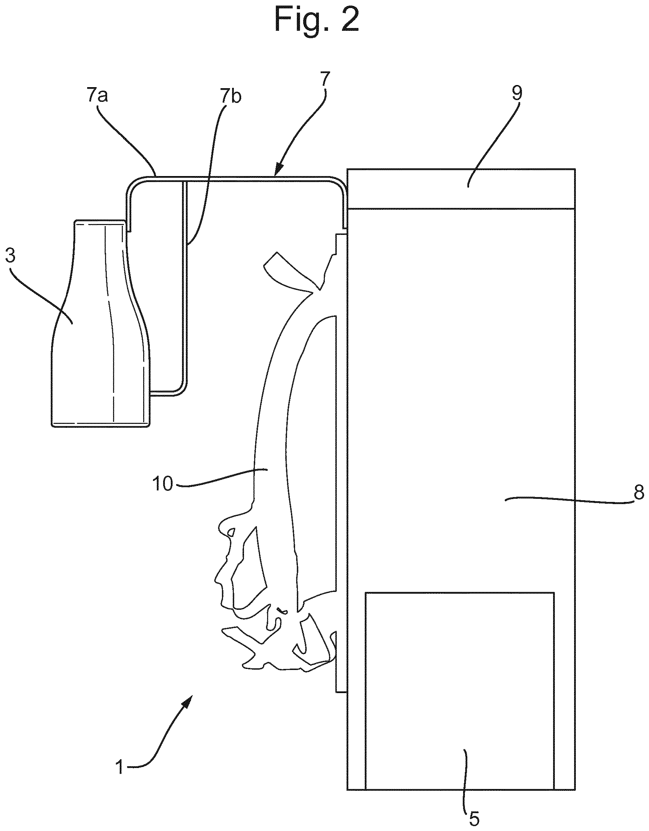

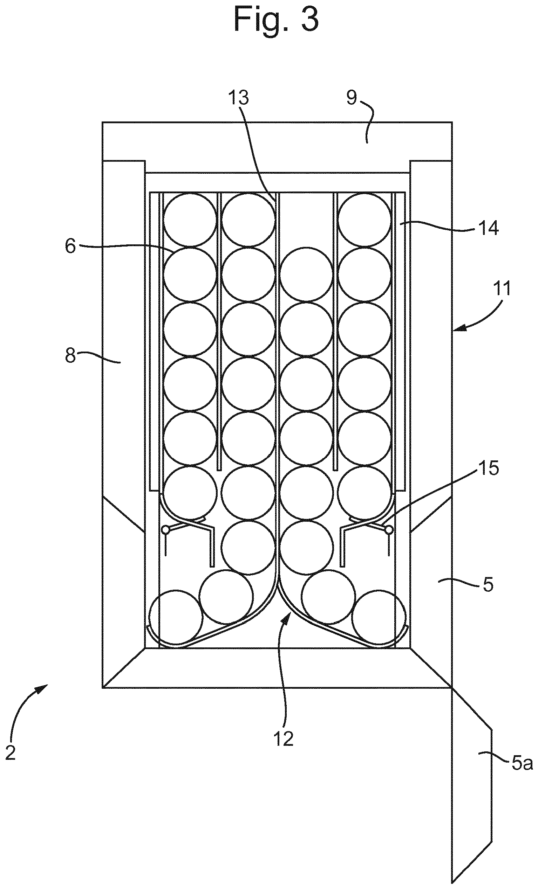

The backpack (2) is mounted on the back of the person (100) by means of a harness (10) which for clarity is omitted from Figure 1 but is shown in Figure 2. As best seen in Figure 3, the backpack comprises a housing (11) which has a main container body (8) comprising side walls and a base, and a lid (9). The housing (11) is made from thermally-insulating material such as polyurethane foam sandwiched between plastic sheets. Near the base of the container body (8) and located on opposite sides thereof are two delivery ports (5) which are each closeable by insulated doors (5a). The lid (9) can be removable from the container body (11) or is at least openable (e.g. in a hinged or similar manner) in order to allow access to the interior of the housing (11) to install or remove therefrom a cassette (12).

The cassette (12) is adapted to hold a plurality of single dose cartridges (6) which are preferably cylindrical. In a preferred embodiment the cassette (12) is adapted to not only hold the cartridges but also to guide delivery of the cartridges, one by one, to the delivery ports (5). The cassette (12) comprises a frame (13) which may be formed from a lightweight material such as plastic or aluminium and in the embodiment shown is shaped to hold and guide the cartridges (6) in four paths or stacks. Such guide mechanisms have been disclosed for holding and delivering beverage containers and reference is made in particular to US 7,810,350. The paths in the cassette frame (13) shown in present Figure 3 are arranged in a similar manner to those of US 7,810,350 but in the present embodiment, the two outermost paths are each interrupted by a catch-mechanism (15). The catch mechanism (15) prevents cartridges (6) in the outermost paths from entering the inner paths unless the mechanism is moved to an open position by a user.

The cassette preferably holds at least 10 cartridges, more preferably at least 20 and most preferably from 25 to 50.

The cassette (12) also comprises packets of phase change material (14), such as eutectic material, on outer surfaces of the frame (13) which assist in maintaining a cool temperature inside the housing (11). To better maintain the temperature of the interior of the housing it has been found advantageous to cool the whole cassette (12) prior to loading into the housing. Therefore the frame (13) and packets (14) of phase change material (14) are preferably both cooled to a temperature of less than -10°C, more preferably less than -12°C and most preferably from -27°C to -15°C, before being inserted into the housing. Preferably the cooling of the frame (13) and packets (14) is achieved by storing them, preferably together, for at least 2 hours, more preferably at least 4 hours and most preferably from 6 to 72 hours in a freezer operating at or below the aforementioned temperature. Most preferably the cassette (12) is stored in the freezer with the packets (14) already assembled on the frame (13), even more preferably with the packets (14) assembled on the frame (13) and the frame (13) pre-loaded with cartridges (6) of frozen confection. Thus in a preferred embodiment the cassette (12) is self-standing and can securely hold the cartridges (6) even when not installed in the housing (11).

As best seen in Figures 1 and 2, the discharge device (3) is suspended in front of the torso of the sales person (100) by means of a rigid support frame (7) which extends from the backpack (2) over the left shoulder of the person (100). The support may have one or more branches (7a, 7b) on which the device (3) is suspended.

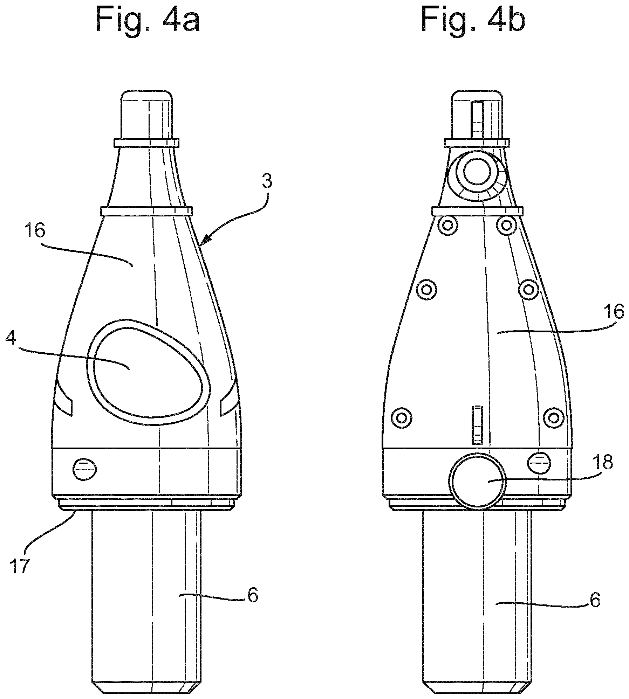

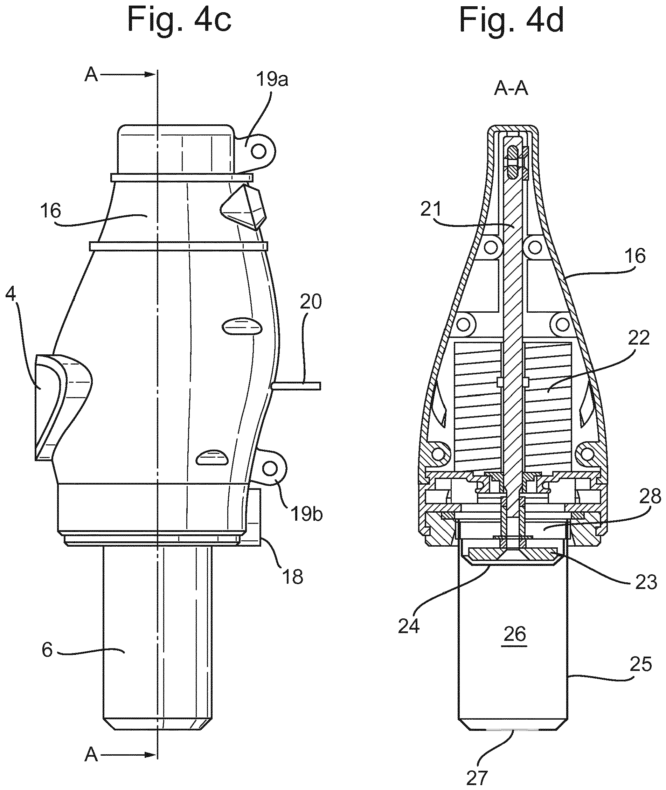

Further details of the device (3) are shown in Figures 4a to 4d. The device (3) comprises a casing (16) which is roughly in the shape of a truncated cone and at its larger, bottom end has an opening (17) shaped to receive the top end of a cartridge (6). On the front of the device is a button (4) for actuating the discharge of confection from the cartridge (6) and on the back of the device is a button (18) for actuating a mechanism for releasing a used cartridge (6) from the device (3).

In the embodiment shown, the cartridge (6) is of the piston-type and thus has an outer cylindrical wall (25) in which slides a piston (24). In a filled state, below the piston (24) is a product compartment (26) filled with frozen confection and extending to at bottom end of the cartridge (6) in which is located an orifice (27) which serves as the product outlet. Above the piston (24) at the top end of the cartridge (6) is an entrance opening (28) through which a plunger (23) of the device (3) can enter and apply a dispensing force on the piston (24) through which the force is transmitted to frozen confection in the product compartment (26) to urge the confection through the product outlet (27).

Within the device casing (16) are a drive motor (22) and a shaft (21). The shaft (21) is fixedly connected at its bottom end to the plunger (23) and passes through the motor in an arrangement that allows the motor (22) to translate the shaft (21) and therefore the plunger (23) in a linear downwards or upwards direction. When the plunger (23) is in a starting position, before discharge, substantially all of the shaft (21) and plunger (23) are withdrawn into the casing (16). The back of the casing (16) includes connectors (19a, 19b) on which the device (3) can be hung from the support (7). In the embodiment shown in Figure 4c, part of a power cable (20) for the motor is shown exiting the casing (16) as the battery (not shown) for powering the motor (22) is located in the backpack (2). Conveniently the path of the power cable between the device (3) and the backpack (2) follows that of the support frame (7) for example by threading the cable (2) inside the frame (7) or fixing it to an outer surface of the frame (7).

In use, the sales person (100) loads the frame (13) of a cassette (12) with pre-frozen cartridges (6) of frozen confection and (if not already attached) attaches the packets (14) of phase change material to the frame (13). The entire, loaded frame is then placed in a freezer for several hours until it has reached a temperature of approximately -18°C. The seller (100) then removes the lid (9) from the backpack (2), places the fully-loaded and cooled cassette (12) into the housing and replaces the lid (9) to achieve the arrangement as shown in Figure 3.

The seller (100) then puts the backpack (2) on as shown in Figure 1 with the support (7) extending over the seller's shoulder to suspend the device (3) in front of the seller's torso. The whole dispenser (1) is secured it in place with the harness (10).

The seller (100) then strolls to a location where potential consumers are located. On encountering a consumer wishing to buy a portion of frozen confection, the seller (100) opens one of the doors (5a) and takes a cartridge (6) from the delivery port (5), wherein the next cartridge (6) in the cassette (12) tumbles to the end of the path at the port (5). The seller (100) then installs the taken cartridge (6) in the device (3) and holds a receptacle (such as a cup or wafer cone) below the product outlet (27) and tells the consumer to push the discharge actuating button (4) whilst the seller (100) closes the door (5a) of the port with the seller's free hand.

On pushing the button (4) the motor (22) is activated and actuates the shaft (21) downwards thus translating the plunger (23) into the cartridge (6) and discharging the frozen confection into the receptacle. Meanwhile the seller (100) can use the free hand to process payment from the consumer.

When the contents of the cartridge (6) have been discharged into the receptacle, the seller (100) hands the filled receptacle to the consumer. At the same time the motor (22) reverses the direction of motion of the shaft (21), withdrawing the shaft (21) and plunger (23) into the casing. The seller then presses the cartridge release button (18) and removes the empty cartridge from the device (3), ready for insertion of a full cartridge (6) into the opening (17) at the bottom of the casing (16).

## Claims

1. A portable dispenser (1) for dispensing frozen confections from single-dose cartridges, the dispenser comprising:

   • a thermally insulated container (11) for storing the single-dose cartridges (6) and being adapted to be mounted on the back of a person; and
   • a discharge device (3) capable of holding a single dose cartridge (6) and discharging frozen confection from the cartridge (6), the discharge device (3) comprising an actuator (4) for activating the discharge device (3);

   wherein the device (3) is adapted to be mounted on the front of the torso of the person and the actuator (4) is disposed on a surface of the device facing away from the person on which the device (3) is mounted; and wherein the actuator is a button (4) and the device (3) is activated by a single press of the button (4).

2. The dispenser as claimed in claim 1 wherein the actuator (4) is disposed on a front surface of the device (3).

3. The dispenser as claimed in any claim 1 or claim 2 wherein the dispenser (1) additionally comprises a tray adapted to be mounted on the front of the person and below the discharge device (3).

4. The dispenser as claimed in any one of claims 1 to 3 wherein the dispenser (1) comprises a device support (7) extending from the thermally insulated container (11) to the device (3).

5. The dispenser as claimed in claim 4 wherein the support (7) is adapted to pass over one or both shoulders of the person on whose back the container (11) is mounted.

6. The dispenser as claimed in claim 4 or claim 5 wherein the device (3) is powered by a power source located in the container (11) and wherein a conduit for conveying power from the source to the device is mounted on or in the support (7).

7. The dispenser as claimed in any one of claims 1 to 6 wherein the cartridges (6) each comprise:

   • a product compartment (26) containing the frozen confection and having a product outlet (27), and
   • a moveable wall (24) through which a dispensing force can be transmitted to the frozen confection to urge it through the outlet (27);

   and the device comprises a plunger (23) for applying the dispensing force to the moveable wall (24).

8. The dispenser as claimed in any one of claims 1 to 7 wherein the frozen confection is an aerated frozen confection.

9. The dispenser as claimed in claim 8 wherein the frozen confection is ice cream.


## Patentansprüche

1. Tragbarer Spender (1) zum Ausgeben von gefrorenem Konfekt aus Einzeldosis-Patronen, wobei der Spender Folgendes umfasst:

   • einen wärmeisolierten Behälter (11) zum Aufbewahren der Einzeldosis-Patronen (6), der so ausgelegt ist, dass er am Rücken einer Person angebracht werden kann; und
   • eine Ausgabevorrichtung (3), die eine Einzeldosis-Patrone (6) halten und gefrorenes Konfekt aus der Patrone (6) ausgeben kann, wobei die Ausgabevorrichtung (3) einen Aktuator (4) zum Aktivieren der Ausgabevorrichtung (3) umfasst;

   wobei die Vorrichtung (3) so ausgelegt ist, dass sie an der Vorderseite des Oberkörpers der Person angebracht werden kann und der Aktuator (4) auf einer Oberfläche der Vorrichtung angeordnet ist, die von der Person, an der die Vorrichtung (3) angebracht ist, weg zeigt; und wobei der Aktuator eine Taste (4) ist und die Vorrichtung (3) durch einmaliges Drücken der Taste (4) aktiviert wird.

2. Spender nach Anspruch 1, wobei der Aktuator (4) auf der Vorderseite der Vorrichtung (3) angeordnet ist.

3. Spender nach Anspruch 1 oder 2, wobei der Spender (1) zusätzlich ein Tablett umfasst, das so ausgelegt ist, dass es an der Vorderseite der Person und unter der Ausgabevorrichtung (3) angebracht werden kann.

4. Spender nach einem der Ansprüche 1 bis 3, wobei der Spender (1) eine Vorrichtungshalterung (7) umfasst, die sich vom wärmeisolierten Behälter (11) zur Vorrichtung (3) erstreckt.

5. Spender nach Anspruch 4, wobei die Halterung (7) so ausgelegt ist, dass sie über eine oder beide Schultern der Person verläuft, an deren Rücken der Behälter (11) angebracht ist.

6. Spender nach Anspruch 4 oder Anspruch 5, wobei die Vorrichtung (3) durch eine Leistungsquelle, die sich im Behälter (11) befindet, mit Leistung versorgt wird und wobei eine Leitung zum Zuführen von Leistung von der Quelle zur Vorrichtung an oder in der Halterung (7) angebracht ist.

7. Spender nach einem der Ansprüche 1 bis 6, wobei die Patronen (6) jeweils Folgendes umfassen:

• ein Produktfach (26), das das gefrorene Konfekt enthält und einen Produktauslass (27) hat, und
• eine bewegliche Wand (24), durch die eine Ausgabekraft auf das gefrorene Konfekt übertragen werden kann, um es durch den Auslass (27) zu drängen;

und wobei die Vorrichtung einen Stempel (23) zum Aufbringen der Ausgabekraft auf die bewegliche Wand (24) umfasst.

8. Spender nach einem der Ansprüche 1 bis 7, wobei das gefrorene Konfekt ein mit Luft durchsetztes gefrorenes Konfekt ist.

9. Spender nach Anspruch 8, wobei das gefrorene Konfekt Eiscreme ist.

**Revendications**

1. Distributeur portable (1) pour distribuer des confiseries glacées à partir de cartouches de doses unitaires, le distributeur comprenant :

• un récipient thermiquement isolé (11) pour stocker les cartouches de doses unitaires (6) et étant adapté pour être monté sur le dos d'une personne ; et
• un dispositif de décharge (3) capable de contenir une cartouche de dose unitaire (6) et décharger une confiserie glacée de la cartouche (6), le dispositif de décharge (3) comprenant un actionneur (4) pour activer le dispositif de décharge (3) ;

dans lequel le dispositif (3) est adapté pour être monté sur le devant du torse de la personne et l'actionneur (4) est disposé sur une surface du dispositif opposée à la personne sur laquelle le dispositif (3) est monté ; et dans lequel l'actionneur est un bouton (4) et le dispositif (3) est activé par une seule pression du bouton (4).

2. Distributeur selon la revendication 1, dans lequel l'actionneur (4) est disposé sur une surface avant du dispositif (3).

3. Distributeur selon l'une quelconque de la revendication 1 ou revendication 2, dans lequel le distributeur (1) comprend de plus un plateau adapté pour être monté sur l'avant de la personne et sous le dispositif de décharge (3).

4. Distributeur selon l'une quelconque des revendications 1 à 3, dans lequel le distributeur (1) comprend un support de dispositif (7) s'étendant à partir du récipient thermiquement isolé (11) jusqu'au dispositif (3).

5. Distributeur selon la revendication 4, dans lequel le support (7) est adapté pour passer sur une ou les deux épaules de la personne sur le dos de laquelle le récipient (11) est monté.

6. Distributeur selon la revendication 4 ou revendication 5, dans lequel le dispositif (3) est alimenté en énergie par une source d'énergie disposée dans le récipient (11) et dans lequel un conduit pour acheminer l'énergie de la source jusqu'au dispositif est monté sur ou dans le support (7).

**7.** Distributeur selon l'une quelconque des revendications 1 à 6, dans lequel les cartouches (6) comprennent chacune :

• un compartiment de produit (26) contenant la confiserie glacée et présentant une sortie de produit (27), et
• une paroi mobile (24) à travers laquelle une force de distribution peut être transmise à la confiserie glacée pour la pousser à travers la sortie (27) ;

et le dispositif comprend un piston (23) pour appliquer la force de distribution à la paroi mobile (24).

**8.** Distributeur selon l'une quelconque des revendications 1 à 7, dans lequel la confiserie glacée est une confiserie glacée aérée.

**9.** Distributeur selon la revendication 8, dans lequel la confiserie glacée est une crème glacée.

# Fig. 1

# Fig. 2

# Fig. 3

## Fig. 4a

## Fig. 4b

# Fig. 4c

# Fig. 4d

A-A

**EP 3 772 979 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1386542 A
- WO 2017133863 A1
- US 7810350 B

**Non-patent literature cited in the description**

- *Journal of Food Engineering,* 1997, vol. 33, 221-226